Europäisches Patentamt

European Patent Office

Office européen des brevets

(19)

(11) Publication number: **0 098 339**
A1

## (12) EUROPEAN PATENT APPLICATION

(21) Application number: **82830170.5**

(22) Date of filing: **15.06.82**

(51) Int. Cl.³: **H 01 Q 3/26**, G 01 S 7/36

(43) Date of publication of application: **18.01.84**
Bulletin 84/3

(84) Designated Contracting States: **DE FR GB NL SE**

(71) Applicant: **SELENIA INDUSTRIE ELETTRONICHE ASSOCIATE S.p.A., Via Tiburtina, KM 12.400, I-00131 Roma (IT)**

(72) Inventor: **Farina, Alfonso, Via delle Vigne 80, I-00148 Roma (IT)**

(54) **An adaptive system for the attenuation of an intentional disturbance applied to a phased array type radar with mechanical scanning.**

(57) System for the cancellation of directional disturbances (jammers) by means of processing the signals received from the radiating elements of a phased array radar planar antenna.

For the formation of the radiating beam in a certain direction all the radiating elements are not combined amongst themselves; some of these are combined separately in order to form auxiliary beams that allow the estimation of the disturbance which is present in the main beam and its removal from it.

The system according to the invention does not therefore require the placement of auxiliary antennas around the main antenna and, much less, the use of multiple processing channels in the case when it is desired to control in amplitude and phase all the elementary radiators of the phased array.

The signal coming from the main channel, with the effects of the disturbance removed can be further processed with the usual techniques that are used with radar receivers to detect the presence of targets and evaluate their kinematic parameters.

"An Adaptive System for the Attenuation of an Intentional Disturbance
Applied to a Phased Array Type Radar With Mechanical Scanning"

## DESCRIPTION

The performance of a phased array radar can be notably reduced by the
reception, from its antenna side lobes, of disturbances that originate
from different directions in space (jammer). The purpose of the present
invention is that of providing a system for the spatial filtering of these
disturbances.

Up to now two methods of notably different complexity and performance
have been adopted.

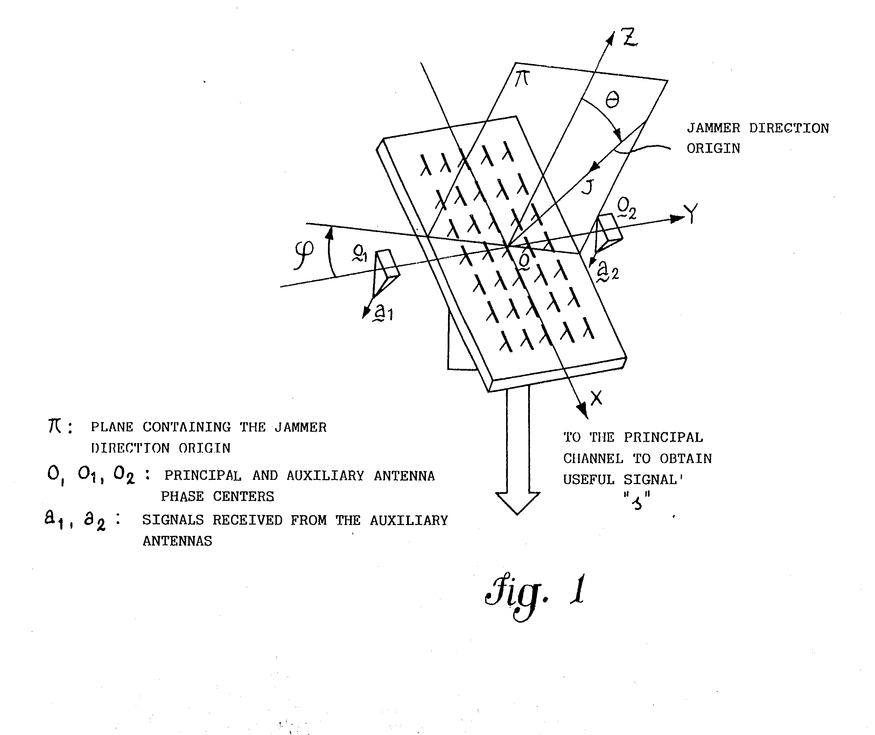

The first method which is an extension of the one used for radar antennas
having mechanical scanning, consists in the placing around the phased
array antenna one or more auxiliary antennas that in turn receive the
disturbances. In Figure 1 is presented an example of such a method that
considers two auxiliary antennas with phased centers $O_1$ and $O_2$ placed
near a phased array antenna with phase center O. Signals $a_1$ and $a_2$ that
come frome these auxiliary antennas are first multiplied by appropriate
coefficients (weights) that modify their phase and amplitude and then are
added to each other. The resulting signal, that is an estimate of the
received disturbances from the phased array antenna is removed at the
output of the latter making it therefore free of disturbances. That is also equivalent to a reduction in gain of the main antenna in the directions from which come the disturbances themselves.

This method requires the use of a number of antenna at least equal to the number of jammers that are to be filtered, of an equal number of receiving channels that make available the received signals in the frequency band most suitable for their processing and of an equal number of circuits for the weight calculations.

The performance of a system of this kind is limited by the non-null distances $\overline{OO_1}$ and $\overline{OO_2}$ between the phase centers of the main antenna and the auxiliary antennas that cause a decorrelation between the signals (main and auxiliary) produced by a one and only same disturbance J that travels diverse distances and strikes the various antennas with a diverse phase. This decorrelation also increases with the increase of the disturber band. In the case of figure 1 the time delay of the received wave of the two phase centers O and $O_1$ is equal to $\overline{OO_1}$ Sin $\theta$ Cos $\varphi$ /c where c is equal to the velocity of light and $\theta$ and $\varphi$ are the polar angular coordinates of the jammer with respect to a reference system fixed with the antenna plane. An analogous delay is obtained for the waves received from the phase centers O and $O_2$. Such time delays, proportioned to the disturber band, produce a phase displacement and therefore decorrelation between the main and auxiliary signals with a resulting reduction of the cancellation system performance. Such decorrelation phenomena can be reduced by decreasing the distance between the auxiliary antenna and the main antenna. Nevertheless, in the case of figure 1 the auxiliary antennas can be, at the most, brought near to the edge of the main antenna.

A second method consists in the modification of the amplitudes and phases of the received signals of all the elementary radiators of which the phased array antenna is equipped and then combining them such as to still have a beam in a specified direction of interest and at the same time spatially filtering the disturbances reducing the gain in their direction of origin. This method, even though it allows the cancellation of a

0098339

greater number of disturbances, requires an extremely elevated (equal to the number of elementary radiators of the phased array) number of processing channels and circuits for the calculation of the weights. Instead, the system which is the object of the present invention allows the spatial filtering of the disturbances using, in order to form the auxiliary signals, some of the radiating elements of the phased array antenna. Therefore, the afore mentioned distances between the phase centers of the antennas (main and auxiliary) are inferior to those of the first method and allow for the obtaining of higher cancellation values. Moreover, the system according to the present invention requires few cancellation circuits (as many as are the auxiliary antennas used) in alternative to the second method that requires a number equal to the elementary radiators of the phased array antenna.

The present invention will now be described with reference to one of its actually preferred realization form and presented as a non limitative illustration on the basis of the figures of the enclosed designs, in which:

Figure 1 shows the general arrangement of a system for the cancellation of disturbances in a phased array radar by means of external auxiliary antennas;

Figure 2 shows a block diagram of the system for the cancellation of disturbances utilizing auxiliary antennas internal to the phased array.

Figure 3 shows criteria for the choice of the radiating elements of the phased array to form two auxiliary beams of the cancellation system and details of block 6 shown in figure 2.

Figure 4 shows the block diagram of the disturbance cancellation system with two auxiliary channels.

Figure 5 shows the block diagram of the circuit for the estimation of the disturbances in the main channel (block 24 Figure 4).

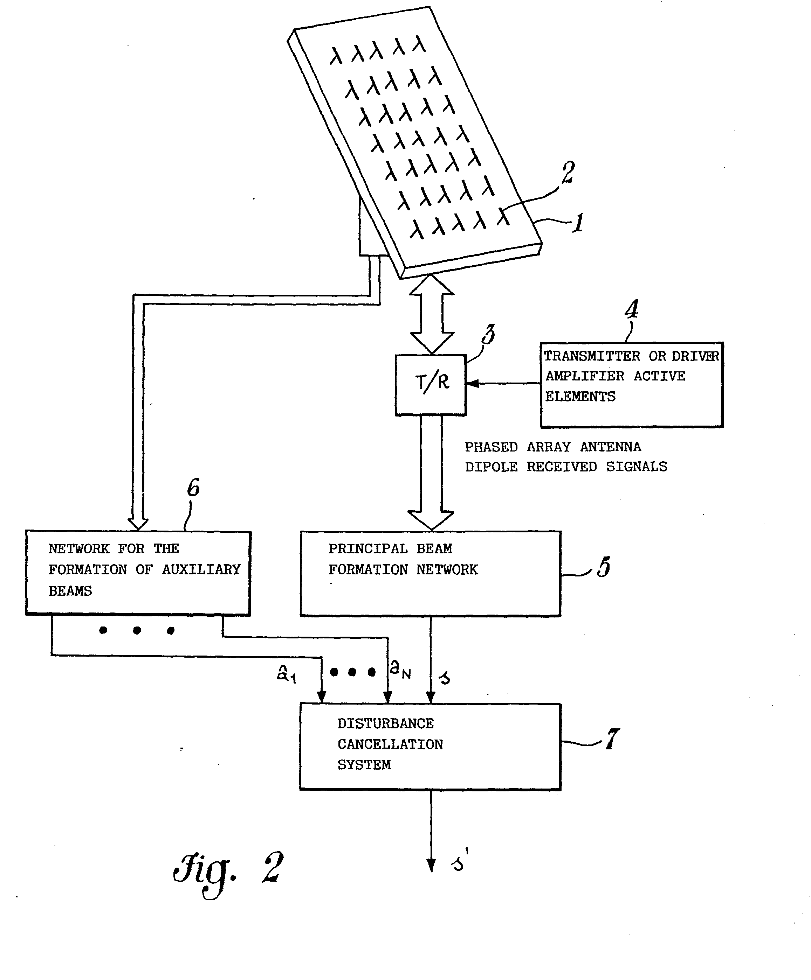

In figure 2 is shown the principle outline that permits the power reduction relative to the directional disturbances received from the side

0098339

lobes of a phased array antenna.

The radar antenna is made up of a planar phased array 1 that can either be fixed or mechanically rotating in the azimuth direction.

The signals intercepted by all the elementary antennas 2 (with the exclusion of those necessary for the formation of the auxiliary beams) are linearly combined, that is, are multiplied by weights independent of the received signals and then summed by means of block 5 to furnish in reception the principal signal s.

The weights of the linear combinations are normally obtained by means of phase shifters located after the small antennas 2. The main beam can explore the space surrounding the antenna either by means of an eventual mechanical rotation of the array or controlled by a suitable time law of the phase shifters associated to antenna 2.

Some of the radiating elements of the phased array do not participate in the formation of the main beam but are combined separately in order to form by means of block 6 auxiliary beams having a gain comparable to the average level of the lateral lobes of the main beam.

By means of system 7 the auxiliary beams furnish signals $a_1$, $a_2$,.....$a_n$ that permit the cancellation of the disturbances present in the main channel.

The radiating elements that make up the auxiliary beams only receive, while those that contribute to the formation of the main beam both receive and transmit.

Consequently, it is necessary by means of duplexer 3 to decouple transmitter 4 from receiving chains 5 and 7.

Block 4 can be a high power transmitter or else an amplifier driver for the single radiating elements according to whether the phased array is either active or else passive.

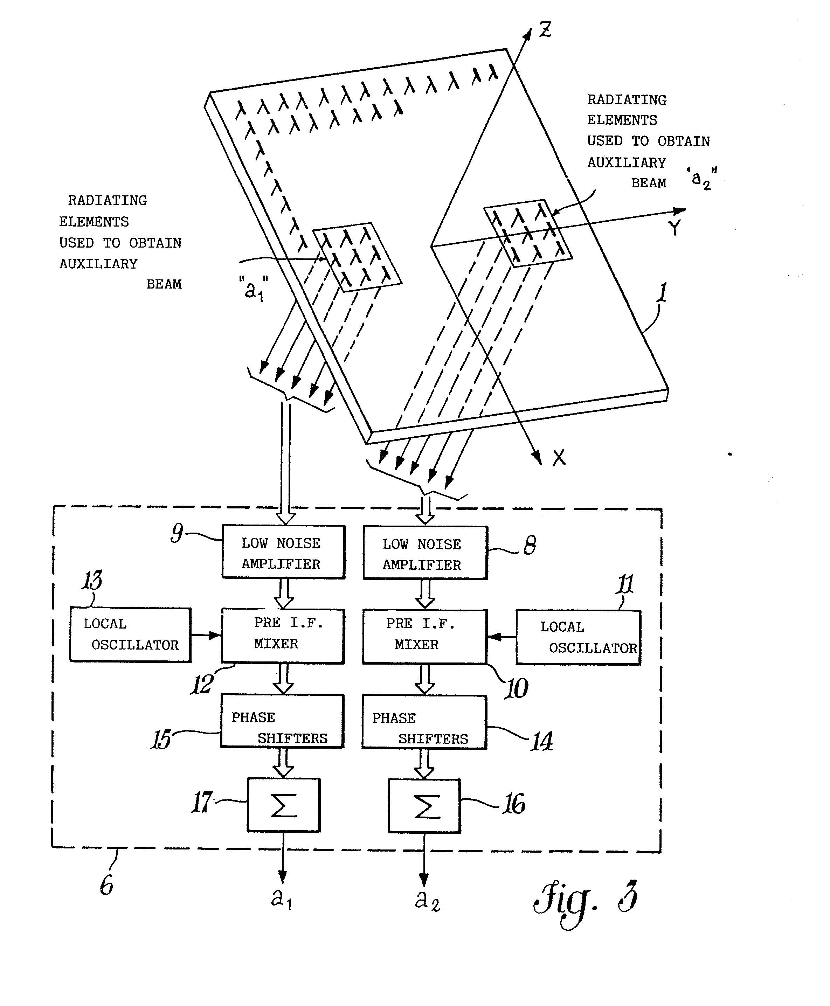

An example of how to choose the radiating elements for forming two auxiliary beams and obtaining signals $a_1$ and $a_2$ is shown in figure 3.

It is first necessary to establish how many radiating elements have to  be combined together in order to obtain an auxiliary beam that has a gain level comparable to that of the side lobes of the main beam. For example, assume that the phased array antenna could have a total number M of elements equal to 3000, to which corresponds a main beam with gain G of about 40 dB (G = $\pi$ M). Let us also assume that the level of the side  lobe is 23 dB below the gain of the main lobe.

Then to form an auxiliary beam that has a 17 dB gain it is sufficient to combine 16 radiating elements.

Successively, it will be established how many auxiliary beams one wishes to create.

The number of auxiliary beams is equal to the number of disturbances  that are to be cancelled and to the cancellation performance that one wishes to obtain: such a number nevertheless should not be so high as to defocus the main beam.

Still remaining is the need to establish the position of the groups of the radiating elements that make up the auxiliary beams.

These positions should be very close to the main antenna phase center in order to reduce the decorrelation effect, by distance difference, whose reference is made by illustrating Figure 1.

Nevertheless, it is also necessary that the auxiliary antennas be sufficiently distanced between themselves such that electromagnetic coupling phenomena that could make them functionally interdependent not be formed and therefore unable to separately cancel disturbances that are different between themselves.

Finally, the choice of the number of auxiliary beams and their position is made case by case as a function of the type of phased array which is available and the cancellation performances that one wishes to obtain on a pre-established disturbance configuration.

The signals received by the radiating elements of the auxiliary beam are first amplified by devices 8 and 9 and therefore converted to a frequency that in general can be different from that one relative to the successive intermediate frequency stages, by means of the local oscillators 11 and 13 and the batteries of mixer 10 and 12.

The signals, prior to being summed by means of devices 16 and 17, are phase shifted by means of phase shifter batteries 14 and 15 in order to create auxiliary beams having a radiation diagram that shifts in time with the main beam and therefore always covers its side lobes.

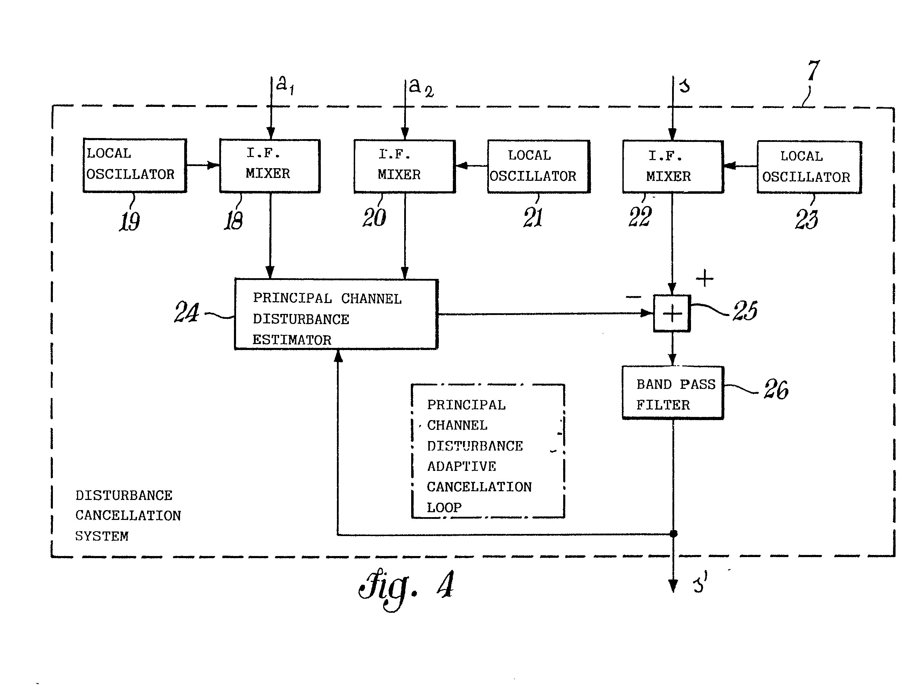

In figure 4 is presented in detail the structure of block 7 in which is noted the presence of an adaptive cancellation "loop" whose purpose is to minimize the effect of the disturbance on the main channel.

The cancellation should be accomplished by an adaptive mode, realizing the fact that the direction of origin and the disturbance intensity are not known and that the spatial configuration of the antenna jammer is not stationary in time (due to the antenna rotation, the variation of the antenna side lobes and the movement of the jammers themselves).

This objective is obtained by means of disturbance estimator 24 that utilizes the output s' signal and the signals of the two auxiliary channels $a_1$ and $a_2$.

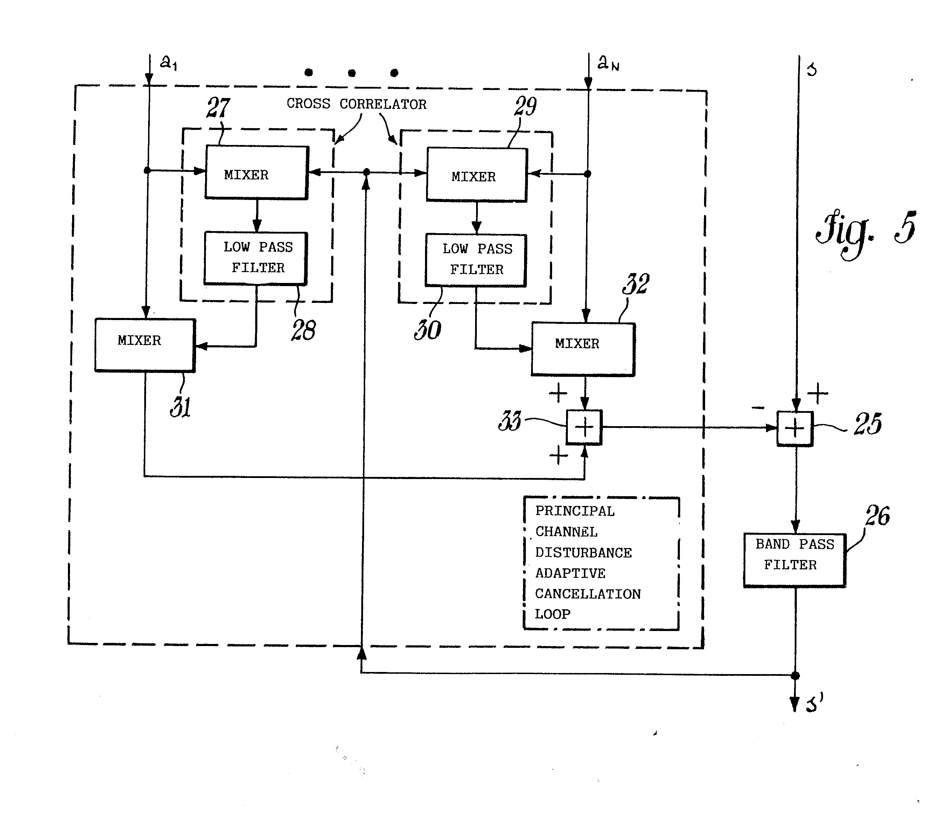

The diagrams of figure 4 and of the successive figure 5 can be easily generalized if the auxiliary antennas are more than two.

In order to obtain signals free of disturbances the estimator output is subtracted from signals of the main channel by means of block 25. Pass band filter 26 is adapted to the useful signal to be displayed, that is, to the echo originating from the target. This is useful for frequency filtering the disturbances that generally have a power spectrum with a band greater than the radar receiver.

The processing of singals s, $a_1$ and $a_2$ is carried out by analogical means, it should nevertheless be noted that there are no limitations of principle to the use of digital techniques.

The processing is carried out at an intermediate frequency in order to reduce the possibility of functioning error of the estimator of which will be spoken of when illustrating figure 5.

This also allows the direct use of signal s available in the radar system, moreover, mixer 22 and local oscillator 23 could be not necessary because they are already present in the radar system prior to block 7.

Figure 5 illustrates in detail the diagram of block 24, that is, the disturbance estimator that works on channel s.

The output signal of estimator 24 is obtained by summing, by means of adder 33, the signals coming from beams $a_1$ and $a_2$. The amplitudes and the phases of these signals are suitably modified by means of mixer 31 and 32 that respectively receive the output signals from the two narrow band filters 28 and 30.

The signals at the output of these two narrow band filters are non other than the correlation between the feedback signal s' and the signals originating from beams $a_1$ and $a_2$.

In fact, the correlations are obtained by respectively multiplying signals s' with $a_1$ and s' with $a_2$ by means of mixer 27 and 29 and then a time integration by means of filter 28 and 30 that have a time constant much longer than the jammer's smallest variational period, that is, a band much more narrower than that filter 26.

Moreover, the estimation of the disturbance operating on s is non other than the sum of the received signals from the auxiliary beams $a_1$ and $a_2$ multiplied by correlation coefficients between the auxiliary beams themselves and the residual of cancellation s'.

The presence of the two auxiliary channels $a_1$ and $a_2$ in estimator 24 permits the effects produced by two independent disturbances to be evaluated separately, or better, to evaluate with greater precision the effect produced from a single jammer. The cancellation system therefore has a performance that increases with the number of auxiliary antennas and as such can counter a greater number of jammers or else, in a more efficient manner, a sole disturber with a wide functioning band. What has been previously stated can be generalized to the case of more auxiliary antennas and to a minor number of disturbers. The last can be thought of as being made up of a number equal to that of the auxiliary antennas, but having a smaller operating band. The reason for the insertion of the disturbance cancellation system (7 figure 2) at the intermediate frequency stage will be now clarified. In principle the disturbance cancellation can be carried out on the video signals that have a carrier at null frequency: consequently, the cross correlators of figure 5 can be implemented with low pass filters rather than with pass band filters.

Nevertheless, this type of realization is very sensitive to continuous undesired components (drifts) that can be produced by mixers 27 and 29. These drifts alter the optimum value of the correlation coefficients that multiply $a_1$ and $a_2$ and therefore drastically reduce the system cancellation.

A means of filtering the drifts consists in realizing the cross correlators with pass band filters that do not allow the passage of the continuous components and therefore making the entire system function at an intermediate frequency.

It is moreover observed that an ulterior realization form can also be obtained with reflector type antennas having purely mechanical scanning. In this case the auxiliary antennas come out of small apertures made in the internal parts of the reflector.

The present invention has been described with reference to its actual preferred realization form but it should be understood that in practice variations and modifications can be introduced by an expert in the field without leaving the protection bounds of the present industrial patent.

CLAIMS

1) A system for the cancellation of directional disturbances received from the side lobes of a Planar Phased Array Radar characterized by the fact that it includes means for processing the intercepted signals from at least one part of the Phased Array Antenna radiating elements.

2) The system according to claim 1 characterized by the fact that it includes means for the forming of auxiliary beams with a gain equal to the average gain of the side lobes of the main beam, said means operating by means of combinations of the outputs of some groups of the elementary radiators of the Phased Array.

3) A system according to claim 1 and/or 2 characterized by the fact that it includes means for the estimate of the disturbance value present in in the main channel by means of a correlation calculation between s' and the output of the auxiliary channels $a_1$, $a_2$,.....$a_n$ and subtracting the said evaluation from s to obtain the useful filtered signal s'.

4) A system for the cancellation of directional disturbances in radars with reflector antennas having mechanical scanning, characterized by the fact of utilizing auxiliary antennas that come out of localized apertures in internal reflector points.

5) A system according to claim 4, characterized by the fact that it includes means for the processing of signals received from the main antenna and from the auxiliary antenna by means of a system as claimed in claim 3.

JAMMER DIRECTION
ORIGIN

$\pi$ : PLANE CONTAINING THE JAMMER
DIRECTION ORIGIN

$O, O_1, O_2$ : PRINCIPAL AND AUXILIARY ANTENNA
PHASE CENTERS

$a_1, a_2$ : SIGNALS RECEIVED FROM THE AUXILIARY
ANTENNAS

TO THE PRINCIPAL
CHANNEL TO OBTAIN
USEFUL SIGNAL'
"$s$"

*Fig. 1*

0098339

TRANSMITTER OR DRIVER
AMPLIFIER ACTIVE
ELEMENTS

T/R

PHASED ARRAY ANTENNA
DIPOLE RECEIVED SIGNALS

NETWORK FOR THE
FORMATION OF AUXILIARY
BEAMS

PRINCIPAL BEAM
FORMATION NETWORK

$a_1$ • • • $a_N$ $s$

DISTURBANCE
CANCELLATION
SYSTEM

$s'$

Fig. 2

*fig. 3*

fig. 4

Fig. 5

5/5

0098339

European Patent
Office

**EUROPEAN SEARCH REPORT**

0098339

Application number

EP  82 83 0170

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 01 Q  3/26 |
| X | US-A-4 146 889  (L.E. BRENNAN et al.) <br> * Colonne 4, lines 26-43 * | 1 | G 01 S  7/36 |
| | --- | | |
| A | US-A-4 313 116  (N.F. POWELL) <br> * Figure 5, column 2, lines 49-58 ; figure 3, column 2, lines 44-49 * | 1,2 | |
| | --- | | |
| A | DE-B-2 650 547  (SIEMENS) <br> * Figure 3 * | 1 | |
| | --- | | |
| A | US-H-3 488 395  (H.H. SOULE et al.) <br> * Figure 2 * | 3 | |
| | --- | | |
| A | US-A-4 129 873  (P.D. KENNEDY) <br> * Column 3, lines 14-20 * | 3 | **TECHNICAL FIELDS SEARCHED (Int. Cl. ³)** |
| | --- | | G 01 S  7/28 |
| A | IEEE TRANSACTIONS ON AEROSPACE AND ELECTRONIC SYSTEMS, vol. AES-16, no. 5, September 1980 M. EGGESTAD et al. "A combined programmed and adaptive null steering technique" <br> * Pages 639-646 * | | G 01 S  7/36 <br> H 01 Q  3/26 |
| | ----- | | |

The present search report has been drawn up for all claims

| Place of search <br> BERLIN | Date of completion of the search <br> 20-01-1983 | Examiner <br> BREUSING J |
|---|---|---|